# EUROPEAN PATENT APPLICATION

(11) **EP 4 295 674 A1**
(43) Date of publication of application: **27.12.2023**
(21) Application number: 23171793.5
(22) Date of filing: 05.05.2023
(51) Int. Cl.: A01K 1/03, B08B 3/02

(54) **WASHING MACHINE FOR WASHING OBJECTS FOR ANIMAL STALLING**

(30) Priority: 23.06.2022 IT 202200013306
(71) Applicant: IWT Srl, 21020 Casale Litta (Varese) (IT)
(72) Inventor: BORGHI, Matteo, 20025 LEGNANO (MILANO) (IT); VITALI, Michele, 21021 ANGERA (VARESE) (IT)
(74) Representative: Inchingalo, Simona

(57) **Abstract**

Washing machine (1) for washing objects for animal stalling comprising a sealed washing chamber (2) defining a containment volume (C) and comprising a walkable floor (3) and side walls (2a). The walkable floor (3) defines, externally to the washing chamber (2), a rest surface of the washing machine (1).

A recirculation system comprises a recirculation line (4) and a transfer pump positioned between the walkable floor (3) and washing devices of the washing chamber (2) to transport, through the recirculation line (4), the water present in the washing chamber (2).

The walkable floor (3) defines a collection surface for the waste washing fluid and at least one of the side walls (2a) comprises a suction slot (5) delimited at the bottom by the walkable floor (3). The suction slot (5) places the washing chamber (2) and the transfer pump in fluid communication.

## Description

### FIELD OF APPLICATION

The present invention relates to a washing machine for washing objects for animal stalling.

In particular, the present invention refers to a washing machine for washing animal containment trays and/or relative accessories and/or other types of components in stalling facilities and research centres, which are placed on special racks or shelves. For example, the above objects may be bases, lids, mangers, and watering bottles.

From now on reference will therefore be made to the washing of cages for animal stalling, without for this reason the invention should lose generality.

### PRIOR ART

The type of washing machines to which reference is made comprises a washing chamber with a volume of about 6-8 cubic metres, inside which the load to be subjected to washing is inserted (positioned as said on special shelves).

Below the floor of the washing chamber, there is a second chamber, called reservoir, for collecting the washing water.

Positioned in an area of the machine defined as "technical compartment", one or more tanks for the preparation of the washing and rinsing water are then provided according to what is known from the state of the art, which are connected to the washing chamber through a dedicated hydraulic system.

To each of these tanks there is coupled a centrifugal pump (washing pump and rinsing pump, respectively) that draws the water from the tanks and transports it into the washing chamber. Here, through special orientable nozzles positioned longitudinally and/or transversely on the internal walls of the washing chamber, the water is sprayed and directed onto the element or elements to be washed.

Once the load to be washed is hit, the water falls on the floor of the washing chamber.

The floor consists of perforated sheet metal panels, the water flows through these panels and is collected in a collection reservoir, located below the washing chamber.

An additional centrifugal pump, or transfer pump, draws the water from the collection reservoir and returns it to the washing tank, thus creating a recirculation that allows the duration of the washing phase to be extended for the necessary time.

The water withdrawn from the collection chamber is reused only in some washing phases. For other phases, such as for example rinsing, the machine uses only clean water coming from, for example, the mains and collected in a special rinsing tank.

The washing machine could be positioned simply by resting it on the floor of the premises where it is installed. In this case, however, given the presence of the reservoir positioned below the washing chamber, the internal floor of the washing chamber would be raised with respect to the external floor of the premises. Therefore, in order to introduce the trolleys inside the washing chamber and to be able to remove them from it, it would be necessary to provide the machine with an ascent and descent ramp which, however, is cumbersome and in any case would make the loading/unloading operation of the trolleys in the machine, which are generally handled manually and loaded with the cages (thus becoming particularly heavy for an operator who needs to move them), difficult or even very tiring and potentially dangerous.

To obviate this problem, it is now a practice in the state of the art to install the washing machine in such a way that the floor of the washing chamber is at the same level as the floor of the premises.

In this way, the manual operation of inserting/extracting the shelves in/from the washing chamber by the personnel in charge is made easier and ergonomic.

To achieve this result, however, it is necessary to provide a hole such that the collection reservoir can be housed since this, as mentioned above, is positioned below the floor of the washing chamber.

The hole must therefore have a surface equal to the base of the machine and a depth equal to at least the height of the collection chamber.

The geometry of the reservoir, and in particular the height or depth thereof, is substantially determined by the need to operate the transfer pump correctly. This affects both the economic and technical aspects concerning the construction and installation of the washing machine.

In fact, it must be considered that the provision of a hole of about 5 square metres, necessary for the insertion of a washing machine of the type considered herein, results in a cost for the customer who buys the machine and must install it at his own expense. This cost will be all the more onerous the deeper the hole will have to be.

In addition, a well must always be provided at the bottom of the hole for the collection of water discharged from the machine and also for the collection of any leaks from the hydraulic circuit of the machine itself. This well must in turn be connected to the sewerage conduit and be compatible with the depth of the latter.

Last but not least, in more than one case the washing machine is installed by the customer not on the ground floor, but on an intermediate floor of a building and in this case the hole must be obtained in a support slab with even more expensive and problematic solutions.

The reduction of the depth of the hole is known to be a problem substantially related to the operation of the centrifugal pump that operates the emptying of the reservoir and the recirculation of the water in the washing tank.

In fact, in order to work correctly, i.e. to guarantee a constant flow rate and not to have cavitation problems, the centrifugal pump must be able to draw the water from the reservoir in such a way that the level of water in the reservoir determines a minimum positive head with respect to the suction port of the pump itself not less than a certain value defined by the characteristic of the pump.

This value, characteristic for each centrifugal pump, is called "Net Positive Suction Head" (NPSH). The NPSH value also varies depending on the temperature of the water. The closer the temperature of the washing water is to the boiling temperature, the higher the NPSH value and therefore the greater the minimum head that must be guaranteed between the level of the reservoir water and the suction port of the pump. Considering that for shelf-washing machines it is required to be able to perform cycles with baths at temperatures close to 95°C, the NPSH value increases thus forcing, with the same pump, to have to increase the depth of the hole.

In the state of the art, it is generally known to make arrangements that might help obtain an optimal NPSH such as, for example:
- mounting the transfer pump according to its vertical axis instead of the horizontal axis;
- the construction of the collection chamber with inclined surfaces with a value of less than 5° with respect to the bottom of the chamber itself; and
- the reduction of the height of the central well and of the transfer channel towards the pump where, however, the depth of the hole of the shelf-washing machines is in any case greater than 100 mm, generally equal to 150 mm.

The racks, typically movable on the wheels and therefore in the form of trolleys, are introduced into the washing chamber, possibly remaining at the level of the floor plane and therefore without having to climb ramps or the aid of lifts of the rack itself.

Upon accessing the washing compartment or chamber, the trolley then moves from lying on the floor of the room in which the machine is installed to the lower surface of the washing chamber.

This lower surface typically consists of a walkable and/or drivable, draining grated or perforated surface, which is functional both to support the sliding of the wheels of the trolleys and to be crossed by the washing liquid sprayed by the nozzles, and which, after having predominantly hit and processed the parts to be treated that are mounted on the racks, falls down together with the dirt that has been detached from the parts subject to treatment, and must therefore be collected in a tank and re-entered into the pressure circuit to continue washing, or be discharged.

The same functions of grated and collection tank are carried out during the different phases of the washing cycle, such as for example pre-washing, washing, rinsing, disinfection.

The solutions known in the art therefore require a lower reservoir, below the grated or perforated surface, for the collection of the liquid transiting over time and in the portion of the process.

Such a reservoir must be sufficiently large for at least the following reasons:
- to collect all the liquid transiting in the reservoir during the process portion, so as not to have liquid heads towards the inlet/outlet port and therefore to avoid any leakages of the liquid in the room.
- to ensure that the pump that withdraws the liquid from the collection tank continuously draws from the conduit, typically a pipe, which joins the pump and the collection reservoir, thus always priming liquid and never air that could hinder the effective draft of the pump.

The result is that in the prior art this reservoir, to meet functional needs and be sufficiently spacious, develops with a height of even tens of centimetres.

This requires, depending on the installation, different solutions to allow the introduction of the racks:
- If the machine is installed on the floor of the room that houses it, thus generating a rise, for example of 20cm, between the floor of the room and that of the washing chamber, ramps or slides must be added to make it possible to slide the racks inside the washing compartment. This solution, in addition to being cumbersome, can give rise to dangerous situations of involuntary movement of the racks in the loading and unloading phases that could thus hit a user or undergo unwanted overturning. Alternatively, uncomfortable, complex, dangerous and expensive lifting platforms can be set up to raise the racks to the level of the washing chamber. A further alternative consists in creating rails that couple the racks above, but this makes manoeuvring the racks complex and prevents the efficient processing of the same;
- If the machine is installed in an excavation prepared in the floor, the operation of loading and unloading the racks is facilitated at most, but this forces to an expensive installation situation, also for the consequent piping, and is not always feasible, for example because the room that must house the machine is located on an intermediate floor of a building that therefore does not allow excavations.

Technical task of the present invention is therefore to make available a washing machine for washing objects for animal stalling that is able to overcome the drawbacks emerging from the prior art.

Aim of the present invention is therefore to make available a washing machine for washing objects for animal stalling that is easy to install without having to carry out excavations.

A further aim of the present invention is therefore to make available a washing machine for washing objects for animal stalling that is easy to install without having to install ramps or alternative means to access the washing chamber of the machine itself.

A further aim of the present invention is therefore to make available a washing machine for washing objects for animal stalling which maintains at least the same water recirculation efficacy and efficiency of the machines known from the state of the art.

### SUMMARY OF THE INVENTION

The specified technical task and the specified objects are substantially achieved by a washing machine for washing objects for animal stalling comprising the technical features set forth in one or more of the appended claims. The dependent claims correspond to possible embodiments of the invention.

In particular, the specified technical task and the specified aims are substantially achieved by a washing machine for washing objects for animal stalling, in particular parts and/or accessories of stalling cages, comprising a sealed washing chamber defining a containment volume and comprising a walkable floor and side walls. The walkable floor defines, externally and inferiorly to the washing chamber, i.e. on the opposite side that is at the lower surface, a rest surface of the washing machine.

The machine further comprises a recirculation system comprising a recirculation line and a transfer pump positioned between the walkable floor and washing devices of the washing chamber to transport, through a recirculation line, the water present in the washing chamber.

The walkable floor defines a collection surface for the washing fluid and at least one of the side walls comprises a suction slot delimited at the bottom by the walkable floor. The suction slot places the washing chamber and the transfer pump in fluid communication.

Advantageously, the collection surface is shaped so as to convey the water falling from the washing devices towards the suction slot.

Advantageously, the suction slot, delimited at the bottom by the walkable surface, allows to obtain a washing machine that does not need a collection compartment and that therefore can be easily installed even on raised floors of a building.

Advantageously, the collection surface allows an inflow of water suitable for the correct steady operation of the transfer pump.

Further characteristics and advantages of the present invention will become more apparent from the indicative and thus non-limiting description of an embodiment of a welding machine.

### BRIEF DESCRIPTION OF THE DRAWINGS

Such description will be set forth herein below with reference to the accompanying drawings, provided for merely indicative and therefore non-limiting purposes, wherein:

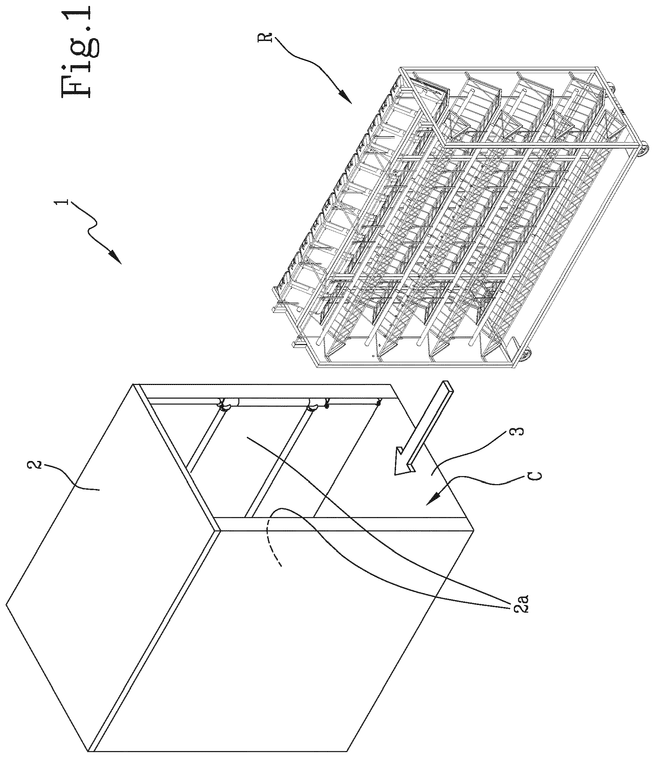

- Figure 1 is a schematic representation of a machine subject-matter of the present invention and of a typical rack in use in rooms for animal stalling;
- Figure 2 is a schematic perspective representation of a component of the bottom of the machine subject-matter of the present invention;
- Figure 3 is a schematic perspective representation of a further embodiment of a component of the bottom of the machine subject-matter of the present invention;
- Figures 4A-4D are schematic representations of different embodiments of the component of the machine subject-matter of the present invention in longitudinal section with respect to the direction of insertion of the rack.

### DETAILED DESCRIPTION

With reference to the accompanying figures, a washing machine for washing objects for animal stalling has been indicated overall with 1 which, for simplicity of description, will be referred to below as machine 1.

Note that for the purposes of the present invention, the term "washing" may also be understood as a "rinsing" process, depending on the jet intensity, the composition of the washing fluid and the washing logic.

By the term "washing fluid" can be meant water or other fluid suitable for washing objects. The "washing fluid" can also be understood as the fluid that has already hit the objects to be washed or rinsed which can therefore present dirt, foam from detergents and water. For simplicity of description, the term washing fluid and water may be used interchangeably hereinafter in the description.

By objects for animal stalling, for example laboratory animals, it can be understood parts and/or accessories of stalling cages having respective surfaces to be washed. In particular, the process/treatment (for washing and/or rinsing) is necessary to remove dirt and impurities that have accumulated during the normal use of the aforementioned objects.

The machine 1 comprises a sealed washing chamber 2 defining a containment volume "C" and a walkable floor 3. Walkable surface means the lower surface of the walkable and/or drivable chamber, and in any case structured to support the material to be washed.

The washing chamber 2 can have the shape of a parallelepiped and therefore has, in addition to the walkable floor 3, side walls 2a, at least one of which is used to define the door for the insertion/extraction of the racks, and a ceiling. Preferably, the side walls 2a, near the walkable floor 3, have an inclined portion.

Preferably, the washing chamber 2 has a base (i.e. the walkable floor 3) with square or rectangular shape.

The walkable floor 3 defines externally to the washing chamber 2 a rest surface of the washing machine 1. In other words, the lower portion of the machine 1 defines a rest base for resting directly on the floor where to install the machine 1 itself.

In other words, the machine 1 can be advantageously installed directly on the floor without the need for excavations or particular arrangements in pipes and without even generating particular rises or differences in height between the floor of the room and the base of the machine 1. In this way it is possible to easily process the trolleys/racks "R" for transporting the objects that can be introduced and extracted without the need for additional devices or aids. In other words, the machine 1 lacks a collection reservoir as will become clearer in the following of the present description. The washing chamber 2 has washing devices (not depicted in the accompanying figures) configured to release water with which to wash and/or rinse the objects.

Preferably, the washing chamber may be provided with a plurality of orientable spray nozzles. The washing chamber can be provided with different washing devices suitable for hitting with water the objects inserted within the containment volume "C".

Preferably, the spray nozzles are evenly distributed along the internal walls of the washing chamber 2. In other words, the spray nozzles are distributed along the side walls and/or on the ceiling of the washing chamber 2.

Preferably, the washing chamber 2 may comprise one or more vertical and/or horizontal rods on which the spray nozzles are installed. Preferably, the spray nozzles are evenly distributed along the rods. Preferably, the collection surface has a non-slip finish. Preferably, the anti-slip finish is a sandblasted finish. Advantageously, the finish allows to prevent an operator from slipping even in the absence of grids or piercings.

The machine 1 further comprises a recirculation system comprising a recirculation line 4 and a transfer pump (not depicted) positioned between the walkable floor 3 and the washing devices of the washing chamber 2. The pump is configured to transport, through the recirculation line 4, the water present in the washing chamber 2.

Preferably, the recirculation system may further comprise a washing tank interposed between the pump and the washing devices. In such a configuration, the washing tank may further be provided with heating means for heating the water contained in the washing tank. In particular, the heating means are configured to heat the water up to a desired operating temperature, i.e. a temperature suitable for washing the objects when the water is released by the washing devices.

Preferably, the recirculation system may further be provided with a further pump interposed between the washing tank and the washing devices so as to facilitate the release of the water into the washing chamber 2. Preferably, the transfer pump comprises a rubber impeller. Advantageously, the rubber impeller allows the transfer pump to perform better under the operating conditions required by the machine 1 subject-matter of the present invention.

The walkable floor 3 defines a collection surface for the washing water that has already hit the objects to be washed. At least one of the side walls 2a comprises a suction slot 5 delimited at the bottom by the walkable floor 3, i.e. by the collection surface. In other words, the suction slot 5 is placed flush with the collection surface. In particular, the suction slot 5 places the collection surface (i.e. the washing chamber 2) and the transfer pump in fluid communication. Consequently, the suction slot 5 performs the sucking function of the pump towards the washing water present in the chamber.

Preferably, the suction slot 5 is directly communicating with an inlet of the transfer pump through the recirculation line 4.

Preferably, the machine 1 comprises a conduit with constant dimensions (i.e. having constant cross-section) interposed between the transfer pump and the suction slot 5. Preferably, said conduit is defined in the inclined portion of the side walls 2a.

In other words, the recirculation line 4 is provided with the aforementioned conduit interposed between the suction slot 5 and the transfer pump which de facto has a section with continuous and constant course that brings from the suction slot to the mouth of the transfer pump (i.e. the inlet of the transfer pump) the water falling from the washing devices.

Therefore, the conduit being part of at least part of the recirculation line 4 collects the water fallen on the walkable floor 3 (by means of the suction slot 5) and transfers it to the transfer pump (by means of the suction action of the pump itself).

Preferably, the suction slot 5 is configured to regulate a flow of water to the transfer pump as a function of a level of water in the washing chamber 2 (i.e. deposited on the walkable floor 3). In other words, the suction slot 5 is configured to regulate a flow of water entering into the suction slot itself as a function of the level of liquid accumulating on the collection surface.

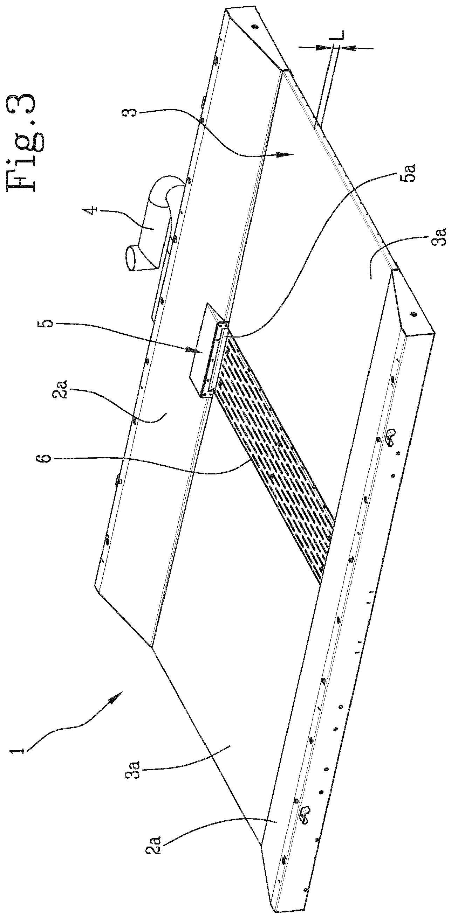

Preferably, like for example depicted in Figure 3, the suction slot 5 comprises a membrane 5a configured to fold towards the transfer pump (i.e. towards the conduit connecting the suction slot 5 and the transfer pump), allowing a flow of water from the washing chamber 2 to the transfer pump, reaching a predetermined level of the water in the washing chamber 2. The membrane 5a is a self-regulating height element defining the minimum height of the suction slot.

Preferably, the suction slot 5 may comprise other types of self-regulating height elements that define the minimum height of the suction slot.

Therefore, the suction slot 5 comprising the self-regulating height element, for example in the form of the membrane 5a, preferably made of rubber or other flexible material, which is placed near the suction slot 5 itself in a vertical position and is folded and oriented internally towards the conduit (i.e. the pump) as a function of the height of the fluid passing on the walkable floor 3. In this way, it is possible to obtain a correct flow regime and a balance between the level of water in the washing chamber 2 and the flow rate evacuated and reintroduced into circulation by the pump. Preferably, the suction slot 5 has a length, measured parallel with respect to a direction of insertion of the racks "R", of at least one-third of an overall length of the washing chamber 2. In this particular conformation, the suction slot 5 is preferably defined in a central portion of the washing chamber 2, i.e. of the walkable floor 3, as depicted for example in the accompanying figures.

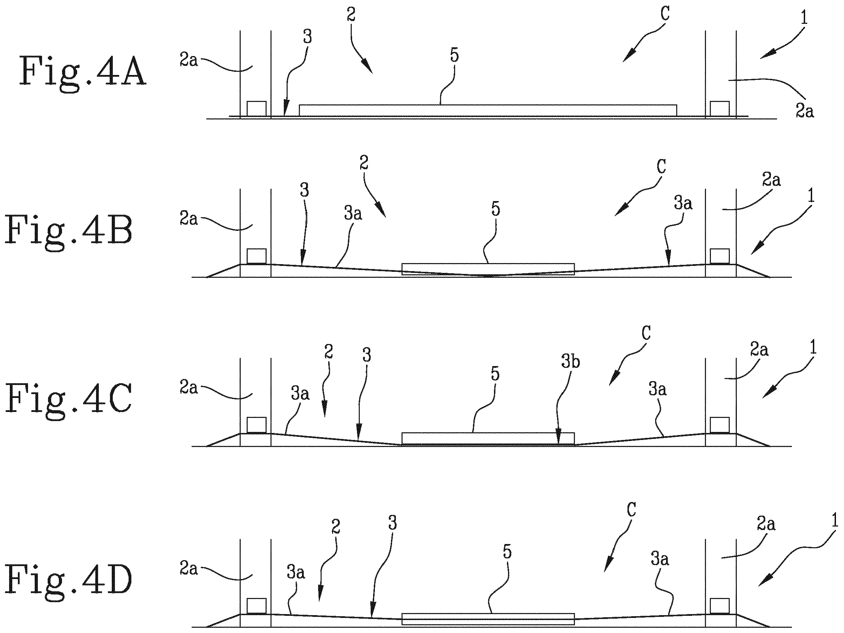

Preferably, the suction slot 5 has a length equal to the length of the washing chamber 2, as depicted for example in Figure 4A. In this embodiment the collection surface is flat and the extension of the suction slot 5 allows to efficiently send the water to the pump.

The suction slot 5 may have small dimensions compared to those described above, for example it may have a length less than one-third of the overall length of the washing chamber 2.

Preferably, the suction slot 5 defines a thin opening, for example between 1 and 5 mm high.

Preferably, the suction slot 6a has a height comprised between 1 and 10 mm.

Even more preferably, the suction slot 6a has a height comprised between 1 and 15 mm.

Such regulation can be implemented by a self-regulating height element 5a for example in the form of a flexible membrane 5a.

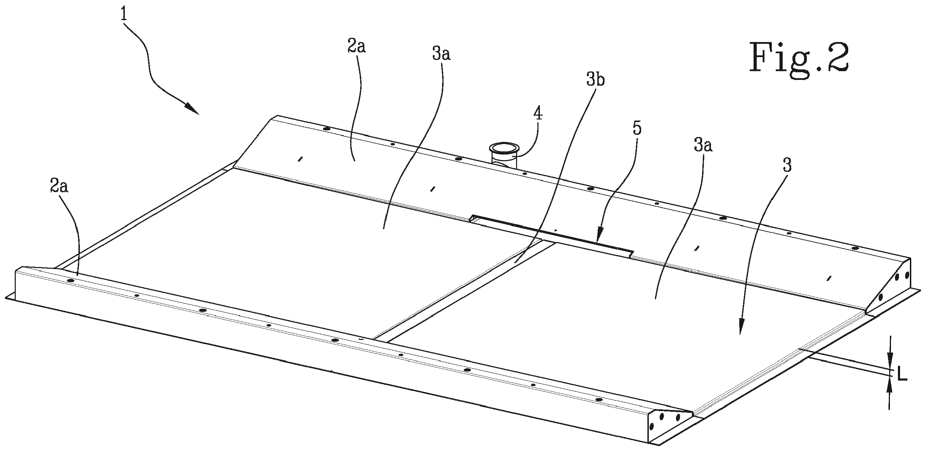

With reference to Figures 2, 3 and 4B-4D the collection surface 3 may have conformation that is tapered downwards. In other words, the collection surface 3 has a substantially concave conformation suitable to allow the flowing of the water towards the suction slot 5.

Advantageously, the concave conformation of the collection surface allows to effectively convey the water falling from the washing devices towards the suction slot 5.

Preferably, the suction slot 5 is arranged in a central portion of the collection surface comprised between two inclined portions 3a. Preferably, each inclined portion 3a of the tapered collection surface has an inclination of at least 1°. Advantageously, this inclination of the collection surface, i.e. of the inclined portion 3a allows to minimize the liquid head remaining towards the hermetic inlet/outlet door of the washing chamber 2. This head consists of a few millimetres of water that is constantly and immediately withdrawn by the pump.

Preferably, each inclined portion 3a has a maximum height "L" comprised between 10 and 30 mm. This maximum height "L" coincides with a maximum step near the inlet/outlet of the washing chamber 2 (i.e. of the machine 1) and is a height that the normal wheels of a rack "R" can overcome without effort and with a minimum push by an operator and without the use of ramps or other special tools. Alternatively, this height can be overcome by a small-sized ramp that does not entail additional expenses or excessive encumbrances for the installation of the machine 1. Preferably, the tapered collection surface has a "V" conformation (as depicted for example in Figures 4B and 4D) or a trapezoidal conformation (as depicted in Figures 2, 3 and 4C).

In the conformation of the "V"-shaped collection surface, the suction slot 5 is defined in the meeting portion of the two inclined portions 3a.

In the conformation of the trapezoidal collection surface, the suction slot 5 is delimited at the bottom by a horizontal portion 3b of the walkable floor 3, as depicted for example in Figure 2 and Figure 3. In other words, the suction slot 5 is at least partially delimited at the bottom by the horizontal portion 3b.

Preferably, as depicted in Figure 4D, the suction slot 5 is at least partially sunk in the walkable floor 3 itself. Also in this embodiment, the machine 1 is totally free of collection reservoir as the lower portion of the suction slot 5 is in any case defined within the overall thickness of the walkable floor 3. Preferably, the machine 1 (i.e. the walkable floor 3) comprises a draining or filtering element 6, for example grated, placed to partially cover the suction slot. Advantageously, the draining or filtering element 6 allows to stop and/or filter the larger dirt residues.

Preferably, the draining or filtering element 6 is arranged in a position that is intermediate to the collection surface near the suction slot 5.

Preferably, the draining or filtering element 6 can be installed or installable flush with the collection surface or be partially integrated therein.

Preferably, the collection surface comprises a vibrating device configured to vibrate the collection surface itself. In other words, the vibrating device is configured to vibrate the walkable floor 3, i.e. the inclined portions 3a. In this way, the water can easily be transferred towards the suction slot 5. Preferably, the vibrating device is integrated or installable in an internal portion of the walkable floor 3.

Preferably, the vibrating device is defined by the rubber impeller of the transfer pump. In other words, the vibration of the rubber impeller of the pump naturally produces a vibration which, depending on its rotation regime, is transmitted to the walkable floor 3, i.e. to the inclined portions 3a.

Advantageously, the present invention is capable of overcoming the drawbacks which have emerged from the prior art.

Advantageously, the machine 1 is installable anywhere without the need for making specific holes and can therefore also be installed on floors other than the first one of any building.

Advantageously, the machine 1 is installable on the same level as the floor, the racks can be inserted/withdrawn from the machine without the aid of slides, platforms, ramps or other alternative means. Advantageously, the machine 1 is able to put back into circulation the used water to clean or rinse the objects even without requiring a collection compartment or other similar elements.

In addition, the collection surface allows an inflow of water suitable for the correct steady operation of the transfer pump while maintaining at least the same process performance of the machines known in the state of the art.

## Claims

1. Washing machine (1) for washing objects for animal stalling, in particular parts and/or accessories of stalling cages, comprising:
- a sealed washing chamber (2) defining a containment volume (C) and comprising a walkable floor (3) and side walls (2a), said walkable floor (3) defining, externally and inferiorly to the washing chamber (2), a rest surface of the washing machine (1);
- a recirculation system comprising a recirculation line (4) and a transfer pump positioned between the walkable floor (3) and washing devices of the washing chamber (2) to transport the washing fluid in the washing chamber (2) through the recirculation line (4);
**characterised in that** said walkable floor (3) defines a collection surface for the washing fluid and at least one of said side walls (2a) comprises a suction slot (5) delimited at the bottom by said walkable floor (3), said suction slot (5) placing said washing chamber (2) and said transfer pump in fluid communication.

2. Machine (1) according to claim 1, wherein said suction slot (5) is configured to regulate a flow of the washing fluid to said pump as a function of a level of the washing fluid in said washing chamber (2).

3. Machine (1) according to claim 2, wherein said suction slot (5) comprises a self-regulating height element, preferably a membrane (5a), configured to fold towards said transfer pump, allowing a flow of washing fluid from said washing chamber (2) to said transfer pump, reaching a predetermined level of said washing fluid in said washing chamber (2).

4. Machine (1) according to one or more of the preceding claims, wherein said suction slot (5) has a length of at least one-third of an overall length of said washing chamber (2).

5. Machine (1) according to claim 4, wherein said suction slot (5) has a length equal to the length of said washing chamber (2).

6. Machine (1) according to one or more of the preceding claims, comprising a conduit with a constant cross-section interposed between said pump and said suction slot (5).

7. Machine (1) according to one or more of the preceding claims, wherein said collection surface has a conformation that is tapered downwards and wherein said suction slot (5) is arranged in a lower portion of the collection surface comprised between two inclined portions (3a).

8. Machine (1) according to claim 7, wherein each inclined portion (3a) of said tapered collection surface has an inclination of at least 1°.

9. Machine (1) according to claim 7 or 8, wherein each inclined portion (3a) has a maximum height (L) comprised between 10 and 30 mm.

10. Machine (1) according to one or more of claims 7-9 wherein said tapered collection surface has a "V" or trapezoidal conformation.

11. Machine (1) according to one or more of the preceding claims, comprising a draining or filtering element (6) placed to partially cover the suction slot (5).

12. Machine (1) according to one or more of the preceding claims, wherein said collection surface comprises a vibrating device configured to vibrate the collection surface itself.

13. Machine (1) according to one or more of the preceding claims, wherein said transfer pump comprises a rubber impeller.

14. Machine (1) according to claims 12 and 13, wherein said vibrating device is defined by said rubber impeller of the transfer pump.

15. Machine (1) according to one or more of the preceding claims, wherein said collection surface has a non-slip finish, preferably a sandblasted finish.
